# EUROPÄISCHE PATENTSCHRIFT

(11) **EP 0 701 510 B1**
(45) Veröffentlichungstag und Bekanntmachung des Hinweises auf die Patenterteilung: **24.09.1997**
(21) Anmeldenummer: 94918855.1
(22) Anmeldetag: 08.06.1994
(51) Int. Cl.: B60G 3/20, B60G 17/04, B60K 7/00, B60K 17/14, B60K 17/30, B62D 7/16, B62D 7/20, B60K 17/04

(54) **AUFHÄNGUNG FÜR EIN FAHRZEUGRAD**
SUSPENSION FOR A VEHICLE WHEEL
SUSPENSION POUR ROUE DE VEHICULE

(30) Priorität: 09.06.1993 DE 9308654 U
(43) Veröffentlichungstag der Anmeldung: 20.03.1996
(73) Patentinhaber: EC Engineering + Consulting Spezialmaschinen GmbH, D-89079 Ulm (DE)
(72) Erfinder: KASPAR, Ernst, D-89597 Munderkingen (DE)
(74) Vertreter: Grünecker, Kinkeldey, Stockmair & Schwanhäusser Anwaltssozietät
(86) Internationale Anmeldenummer: EP9401873
(87) Internationale Veröffentlichungsnummer: WO9429133

(56) Entgegenhaltungen:
- DE-A- 1 811 886
- DE-A- 4 131 545
- FR-A- 2 612 461
- GB-A- 1 041 063
- GB-A- 1 189 945
- US-A- 3 581 682
- US-A- 5 150 763

## Beschreibung

Die Erfindung bezieht sich auf eine Aufhängung für ein von einem Hydraulikmotor angetriebenen Fahrzeugrad mit einem drehbar in einem einen Innenkörper und einen Außenkörper aufweisenden Führungsgelenk gelagerten Achsträger, wobei der Außenkörper über Querlenker mit dem Fahrzeug verbunden und der Hydraulikmotor über die Querlenker und das Führungsgelenk mit Hydraulikflüssigkeit versorgt ist.

Bei einer aus der GB 1 189 945 bekannten Aufhängung dieser Gattung ist jeweils oberhalb und unterhalb des Achsträgers ein Querlenker an dem Außenkörper des Führungsgelenks uber eine Drehzapfenlagerung gelagert. Jeder der Querlenker besteht aus zwei starr miteinander verbundenen hohlen Rohren, die als Ölkanäle dienen. Über einen Ölkanal des oberen Querlenkers wird Öl durch die zugehörige Drehzapfenlagerung und das Führungsgelenk dem Hydraulikmotor zugeführt und diesem durch den unteren Teil des Führungsgelenks, uber die untere Drehzapfenlagerung und einen Ölkanal des unteren Querlenkers, wieder zurückgeleitet. Der zweite Ölkanal jedes Querlenkers dient zum Rückführen von Lecköl aus der zugehörigen Drehzapfenlagerung und dem angrenzenden Bereich des Führungsgelenks.

Leider weist diese Aufhängung Nachteile bezüglich der Stabilität und der Sicherheit der Hydraulikversorgung auf. Da alle Querlenker von Ölkanälen durchsetzt sind, können sie die auf sie einwirkenden Bremskräfte, Beschleunigungskräfte und Seitenführungskräfte nur in begrenztem Umfang aufnehmen. Dies bereitet insbesondere Schwierigkeiten bei der Verwendung in Schwerlastfahrzeugen, bei denen vor allem die unteren Querlenker stark belastet sind. Versagt beispielsweise einer der Querlenker, so ist dadurch automatisch auch der Hydraulikkreislauf beschädigt.

Eine Aufhängung gemäß dem Oberbegriff des Anspruchs 1 ist aus der Schrift DE-A-1 811 886 bekannt.

Der Erfindung liegt die Aufgabe zugrunde, eine Vorrichtung der eingangs genannten Gattung zu schaffen, die neben einer stabilen Führung des Rades eine zuverlässige Hydraulikversorgung des Hydraulikmotors gewährleistet.

Diese Aufgabe wird erfindungsgemäß dadurch gelöst, daß an dem Außenkörper zwei separate obere Querlenker über voneinander beabstandete obere Lagerstellen angelenkt sind und über die Lagerstelle des einen der oberen Querlenker die Hydraulikzuführ und über die Lagerstelle des anderen die Hydraulikabfuhr erfolgt.

Dadurch kann die gesamte Hydraulikversorgung von dem Untergrund beabstandet und in dem geschützteren oberen Bereich angeordnet werden. Insbesondere kann der untere Querlenker wahlweise von der Funktion als Hydraulikleitung befreit und kann ganz nach Stabilitätsgesichtspunkten gestaltet werden. Dies ist besonders günstig, weil der größere Anteil der Führungs- und Lenkkräfte über den unteren Querlenker übertragen wird.

Der untere Querlenker kann beispielsweise direkt an dem Achsträger befestigt werden, was eine größere Bodenfreiheit des Fahrzeugs erbringt.

Die zwei separaten oberen Querlenker sind beabstandet voneinander angeordnet und können in unterschiedlichen Richtungen zum Rahmen hin aufgespreizt werden. Die durch sie übertragenen Kräfte können in die unterschiedlichen Richtungen der Querlenker aufgeteilt werden, wobei ungünstige Biegebelastungen der Querlenker minimiert werden.

Zudem können Sie unabhängig voneinander ausgebaut werden, wodurch sich die Wartung der Hydraulikversorgung erleichtert.

In besonderer Weise kann jeder oberen Lagerstelle eine separate, die Außenwand des Außenkörpers und das Innere des Innenkörpers durchsetzende Hydraulik-Drehdurchführung zugeordnet und jeweils über einen von zwei separat nebeneinander durch den Innenkörper verlaufenden Ölkanälen mit einem Ölanschluß des Hydraulikmotors verbunden sein. Dadurch werden Hydraulikzufuhr und -abfuhr beide von der oberen Seite her über das Führungsgelenk zugeführt. Insbesondere kann das Führungsgelenk mit den Hydraulik-Drehdurchführungen auf den oberen Bereich des Achsträgers beschränkt werden, wodurch eine größere Bodenfreiheit gewährleistet ist.

Vorzugsweise ist jeder der oberen Querlenker mit einem Ölkanal versehen, der mit einer der Hydraulik-Drehdurchführungen verbunden ist. Dadurch sind die Ölzuleitungen bzw. Ableitungen in den Querlenkern geschützt gelagert und im Vergleich zu einer herkömmlichen Schlauchleitung gegen Beschädigungen wesentlich besser geschützt. Beim einzelnen Ausbauen der oberen Querlenker können Hydraulikzuleitung und -ableitung unabhängig voneinander gewartet werden.

Besonders vorteilhaft weist jede Drehdurchführung einen ersten Ringkanal in der Innenwandung des Außenkörpers und einen mit dem ersten Ringkanal fluchtenden zweiten Ringkanal in der Oberfläche des verdrehbaren Innenkörpers auf, wobei der zweite Ringkanal mit dem zugehörigen Ölkanal verbunden ist. Diese Anordnung gewährleistet eine funktionsgerechte Flüssigkeitsverbindung durch das Führungsgelenk hindurch.

Günstigerweise sind die beiden oberen Querlenker mit ihren Lagerstellen einander gegenüberliegend am oberen Ende des Außenkörpers gelenkig gelagert, und die inneren Enden der oberen Querlenker sind gelenkig am Fahrzeugrahmen befestigt. Die gegenüberliegende Lagerung der oberen Querlenker am Außenkörper gewährleistet eine gewisse Bewegungsfreiheit gegeneinander, wobei gleichzeitig die auf das Führungsgelenk wirkenden Kräfte gleichmäßig auf die beiden Querlenker aufgeteilt werden.

In besonderer Weise können die oberen Querlenker in einer V-Form zueinander angeordnet sein. Die V-Form hat sich als besonders stabile Konstruktion erwiesen, in der die Kräfte geteilt in unterschiedliche Richtungen abgeleitet werden.

Als Variante der Erfindung sind die Lagerstellen und/oder die inneren Enden der oberen Querlenker als Kugelköpfe ausgebildet, welche von einer Bohrung durchsetzt sind, an welche der jeweilige Ölkanal des Querlenkers angeschlossen ist. Die Kugelköpfe gewähren eine optimale Lagerung der oberen Querlenker an dem Rahmen bzw. an dem Führungsgelenk mit sphärischer Bewegungsfreiheit. Dadurch wird die ungünstige Biegebelastung der oberen Querlenker minimiert. Über die Bohrung kann trotz der sphärischen Bewegbarkeit der Kugelköpfe die Hyraulikflüssigkeit zugeleitet bzw. abgeleitet werden.

In bevorzugter Ausführungsform ist der Außenkörper des Führungsgelenks mit dem Außenrohr eines Federzylinders verbunden, dessen Kolbenstange am Fahrzeugrahmen gelagert ist und der zwischen den beiden oberen Querlenkern angeordnet ist. Über den Federzylinder können die Aufstandskräfte des Fahrzeugs aufgenommen werden. Auch hierfür eignet sich als Angriffspunkt das Außenrohr des Führungsgelenk, das am Fahrzeugrahmen abgestützt ist. Günstigerweise ist dabei der Federzylinder integral zwischen den beiden oberen Querlenkern angeordnet. Dies gewährleistet eine kompakte Ausbildung der Aufhängung, wobei die Aufstandskräfte des Fahrzeugs direkt über den Federzylinder abgeleitet werden.

Vorzugsweise ist der Federzylinder als Zugzylinder ausgebildet.

Besonders vorteilhaft kann innerhalb des Achsträgers ein mehrstufiges Schaltgetriebe genaltert sein, welches dem Hydraulikmotor antriebsübertragend zugeordnet ist. Über das Schaltgetriebe können die Momenten- und Fahrgeschwindigkeitsbereiche des Fahrzeuges gesteigert werden, wobei das Schaltgetriebe geschützt in dem Achsträger angeordnet ist und den Querlenkern oder dem Federzylinder nicht bewegungshindernd im Wege steht.

Als Variante der Erfindung ist ein unterer Querlenker vorgesehen, dessen äußeres Ende gelenkig mit dem Achsträger verbunden ist und der sich von dem äußeren Ende V-förmig zu zwei inneren, gelenkig mit dem Fahrzeugrahmen verbundenen Enden erstreckt. Über den unteren Querlenker werden der größere Teil der Seitenführungskräfte vom Rad auf den Rahmen übertragen. Die V-Form teilt die zu übertragenden Kräfte richtungsmäßig auf, wodurch eine besonders stabile Halterung entsteht.

Zweckmäßigerweise kann die Mittelachse des Fahrzeugsrades den Fahrzeugrahmen schneiden.

Es wird vorgeschlagen, daß ein Lenkhebel an einer oberen Verlängerung des Innenkörpers befestigt ist, wobei der Lenkhebel an einer Spurstange angeschlossen ist.

Die Erfindung wird im folgenden anhand eines Ausführungsbeispieles und unter Bezug auf die Zeichnung näher beschrieben. In dieser zeigt:
- Fig.1: eine teilweise geschnitten dargestellte Ansicht der erfindungsgemäßen Vorrichtung,
- Fig.2: eine Aufsicht in x-Richtung auf die erfindungsgemäße Vorrichtung und
- Fig.3: eine Untersicht in y-Richtung auf die erfindungsgemäße Vorrichtung.

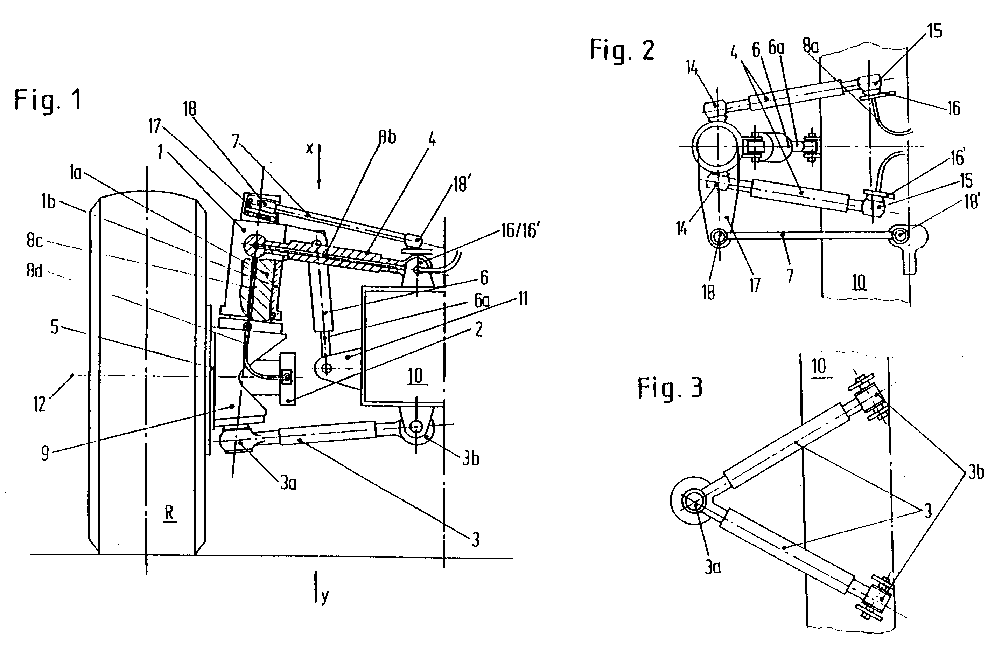

In Fig. 1 ist der Aufbau der neuerungsgemäßen Vorrichtung in ihren wesentlichen Komponenten in ihrem Zusammenwirken mit einem lenkbaren sowie antreibbaren Fahrzeugrad R sowie einem Fahrzeugrahmen 10 dargestellt. Das Fahrzeugrad R ist an einem mit einem Führungsgelenk 1 gekoppelten Achsträger 9 gehalten, wobei dieses Führungsgelenk im wesentlichen aus zwei relativ zueinander verdrehbaren Körpern besteht, nämlich einem Innenkörper 1a und einem Außenkörper 1b. Die beiden Körper 1a und 1b sind allein relativ zueinander verdrehbar, nicht jedoch in Vertikalrichtung zueinander verschieblich.

Mit dem Innenkörper 1a ist mechanisch der Achsträger 9 verbunden, dessen Mittelachse 12 die Drehachse des Fahrzeugrades R bildet. Die Mittelachse 12 schneidet den s Fahrzeugrahmen 10, da dieser im Vergleich zu herkömmlichen Fahrzeugen extrem tiefliegend angeordnet ist.

Der Außenkörper 1b des Führungsgelenk 1 ist mit Hilfe von zwei einander gegenüberliegend auf gleicher Höhe angeordneten Querlenkern 4 beweglich mit dem Rahmen 10 verbunden. Die beiden Querlenker 4, die am oberen Ende des Außenkörpers 1b angreifen, weisen an ihren dem Außenkörper zugewandten Enden jeweils einen Kugelkopf 14 und an ihren dem Rahmen zugewandten Enden jeweils einen Kugelkopf 15 auf (Fig. 2). Wie Fig. 2 ferner zu entnehmen, ist jeder der beiden Kugelköpfe 15 beweglich an einer Konsole 16 bzw. 16' befestigt, welche mit dem Fahrzeugrahmen 10 verschweißt sind.

An einer oberen Verlängerung des Innenkörpers 1a des Führungsgelenkes 1 ist ein Lenkhebel 17 befestigt, welcher kraftschlüssig mit dem Achsträger 9 verbunden ist. Eine Spurstange 7 greift mit einem Kugelkopf 18 an dem Lenkhebel 17 an. Am Lenkhebel 17 ist die Spurstange 7 mit Hilfe des ersten Kugelkopfes 18 räumlich, d.h. dreidimensional beweglich, gelagert. Ein weiterer Kugelkopf 18' ist am anderen Ende der Spurstange 7 vorgesehen und mit einer nicht dargestellten Einrichtung zum Lenken des Fahrzeugrades R verbunden.

Außer den beiden oberen Querlenkern 4 ist ein unterer V-förmiger Querlenker 3 vorgesehen. Der untere Querlenker 3 ist mit seinem dem Fahrzeugrad R zugewandten Ende 3a an der Unterseite des Achsträgers 9 angelenkt, während die gegenüberliegenden Enden 3b des unteren Querlenkers 3 an der Unterseite des Fahrzeugrahmens 10 mit Hilfe von Konsolen angelenkt sind (Fig. 3).

Die Querlenker 3 und 4 dienen zum Aufnehmen der Bremskräfte, der Beschleunigungskräfte sowie der Seitenführungskräfte, jeweils entsprechend den zugeordneten Hebelverhältnissen.

Die Aufstandskraft des Fahrzeuges wird aufgenommen von einem als Zugzylinder ausgebildeten Federzylinder 6, dessen Kolbenstange 6a mit Hilfe einer Konsole 11 am Fahrzeugrahmen 10 befestigt ist. Das Außenrohr des Federzylinders 6 ist am Außenkörper 1b des Führungsgelenkes befestigt, welcher sich seinerseits am Innenkörper 1a abstützt. Zu diesem Zwecke können nicht dargestellte Kegellager verwendet werden.

Von der nicht dargestellten Radnabe verläuft die Aufstandskraft zum Innenkörper 1a und von dort über die beispielsweise als Kegellager ausgebildete Lagerung zum Außenkörper 1b. Von dort geht der Kraftfluß über die Anbindung des Federzylinders 6 zum Außenrohr des Federzylinders und von dort über die hydraulische Widerstandseinrichtung des Federzylinders auf die Konsole 11 des Fahrzeugrahmens 10.

Im Inneren des Radträgers 9 gehaltert sind ein Hydraulikmotor 2 und ein Getriebe 5, vorzugsweise ein zweistufig schaltbares Getriebe.

Zur Versorgung des Hydraulikmotors 2 mit Hydrauliköl ist ein Ölzuführungssystem vorgesehen, welches einen nicht dargestellten Hydraulikölvorrat mit dem Hydraulikmotor 2 verbindet. Von dem (nicht dargestellten) Ölvorrat geht je ein erster Ölleitungsabschnitt 8a (Fig. 2) zu einer der Konsolen 16, 16' und von da aus in die Kugelköpfe 15. Von den Kugelköpfen 15 bis zu den gegenüberliegenden Kugelköpfen 14 verläuft durch die Querlenker 4 je ein zweiter Ölleitungsabschnitt in Form einer Ölzuführbohrung 8b. Dieser zweite Ölleitungsabschnitt 8b durchsetzt, ausgehend vom Kugelkopf 14, die Wandung des Außenkörpers 1b des Führungsgelenkes 1 und gelangt in einen nicht dargestellten Ringkanal, der in der Innenwandung dieses Außenkörpers 1b ausgebildet. Fluchtend zu diesem ersten Ringkanal ist ein entsprechender zweiter Ringkanal in der Oberfläche des Innenkörpers 1a ausgebildet. Von diesem zweiten Ringkanal (nicht dargestellt) führt ein dritter Ölleitungsabschnitt 8c in Form eines Ölkanals durch das Innere des Innenkörpers 1a und von dort aus zum Hydraulikmotor 2, wie in Fig. 1 mittels des vierten Ölleitungsabschnittes 8d dargestellt. Wie vorstehend beschrieben, sind die zueinander verdrehbaren Körper 1a, 1b des Führungsgelenkes 1 mit einer Öldrehdurchführung versehen, die unbeschadet der jeweiligen Stellung der beiden Körper 1a, 1b zueinander den Zufluß von Hydrauliköl zum Hydraulikmotor (und zurück) gestattet. Der vierte Ölleitungsabschnitt 8d kann als Hydraulikschlauch ausgebildet sein.

Die vorstehend beschriebene Ölzuführung mit den als innenliegenden Bohrungen ausgebildeten Abschnitten 8b (innerhalb der beiden oberen Querlenker 4) sowie 8c (im Inneren des Innenkörpers 1a) ist besonders gesichert gegenüber zerstörerischen Einwirkungen von außen, die beim Kranbetrieb häufig kaum zu vermeiden sind. Sind für spezielle Einsatzgebiete solche Beschädigungen nicht zu befürchten, so können die vier Ölleitungsabschnitte 8a - 8d auf herkömmliche Weise als Hydraulikschläuche ausgebildet sein.

Wie aus Fig. 1 erkennbar, sind die Achsträger 9 und damit auch der Hydraulikmotor 2 sowie das Schaltgetriebe 5 im Nabenbereich des Fahrzeugrades R, d.h. im Bereich der Rad-Mittelachse 12, angeordnet. Diese wiederum schneidet, wie bereits erwähnt, den tiefgelegten Fahrzeugrahmen 10.

## Patentansprüche

1. Aufhängung für ein von einem Hydraulikmotor (2) angetriebenen Fahrzeugrad (R) mit einem drehbar in einem einen Innenkörper (1a) und einen Außenkörper (1b) aufweisenden Führungsgelenk (1) gelagerten Achsträger (9), wobei der Achsträger (9) über Querlenker (4) mit dem Fahrzeug (10) verbunden und der Hydraulikmotor (2) über einen oberen Querlenker (4) und das Führungsgelenk (1) mit Hydraulikflüssigkeit versorgt ist,
**dadurch gekennzeichnet**,
daß an dem Außenkörper (1b) zwei separate obere Querlenker (4) über voneinander beabstandete obere Lagerstellen (14) angelenkt sind und über die Lagerstelle des einen der oberen Querlenker (4) die Hydraulikzufuhr und über die Lagerstelle des anderen die Hydraulikabfuhr erfolgt.

2. Aufhängung nach Anspruch 1,
**dadurch gekennzeichnet**,
daß jeder oberen Lagerstelle (14) eine separate, die Außenwand des Außenkörpers (1b) und das Innere des Innenkörpers (1a) durchsetzende Hydraulik-Drehdurchführung zugeordnet ist.

3. Aufhängung nach einem der vorhergehenden Ansprüche,
**dadurch gekennzeichnet**,
daß jede obere Lagerstelle (14) über einen von zwei separat nebeneinander durch den Innenkörper (1a) verlaufenden Ölkanälen (8c) mit einem Ölanschluß des Hydraulikmotors (2) verbunden ist.

4. Aufhängung nach einem der vorhergehenden Ansprüche,
**dadurch gekennzeichnet**,
daß jeder der oberen Querlenker (4) mit einem Ölkanal (8b) versehen ist, der mit einer der Hydraulik-Drehdurchführungen verbunden ist.

5. Aufhängung nach einem der vorhergehenden Ansprüche,
**dadurch gekennzeichnet**,
daß jede Drehdurchführung einen ersten Ringkanal in der Innenwandung des Außenkörpers (1b) und einene mit dem ersten Ringkanal fluchtenden zweiten Ringkanal in der Oberfläche des verdrehbaren Ringkörpers (1a) aufweist, wobei der zweite Ringkanal mit dem zugehörigen Ölkanal (8c) verbunden ist.

6. Aufhängung nach einem der vorhergehenden Ansprüche,
**dadurch gekennzeichnet**,
daß die beiden oberen Querlenker (4) mit ihren Lagerstellen (14) einander gegenüberliegend am oberen Ende des Außenkörpers (1b) gelenkig gelagert sind und daß die inneren Enden (15) der oberen Querlenker (4) gelenkig am Fahrzeugrahmen (10) befestigt sind.

7. Aufhängung nach einem der vorhergehenden Ansprüche,
**dadurch gekennzeichnet**,
daß die oberen Querlenker (4) in einer V-Form zueinander angeordnet sind.

8. Aufhängung nach einem der vorhergehenden Ansprüche,
**dadurch gekennzeichnet**,
daß die Lagerstellen (14) und/oder die inneren Enden (15) der oberen Querlenker als Kugelköpfe (15) ausgebildet sind, welche von einer Bohrung durchsetzt sind, an welche der jeweilige Ölkanal (8b) des Querlenkers (4) angeschlossen ist.

9. Aufhängung nach einem der vorhergehenden Ansprüche,
**dadurch gekennzeichnet**,
daß der Außenkörper (1b) des Führungsgelenks (1) mit dem Außenrohr eines Federzylinders (6) verbunden ist, dessen Kolbenstange (6a) am Fahrzeugrahmen (10) gelagert ist, und der zwischen den beiden oberen Querlenkern (4) angeordnet ist.

10. Aufhängung nach einem der vorhergehenden Ansprüche,
**dadurch gekennzeichnet**,
daß der Federzylinder (6) als Zugzylinder ausgebildet ist.

11. Aufhängung nach einem der vorhergehenden Ansprüche,
**dadurch gekennzeichnet**,
daß innerhalb des Achsträgers (9) ein mehrstufiges Schaltgetriebe (5) gehaltert ist, welches dem Hydraulikmotor antriebsübertragend zugeordnet ist.

12. Aufhängung nach einem der vorhergehenden Ansprüche,
**dadurch gekennzeichnet**,
daß ein unterer Querlenker (3) vorgesehen ist, dessen äußeres Ende (3a) gelenkig mit dem Achsträger (9) verbunden ist und der sich von dem äußeren Ende (3a) V-förmig zu zwei inneren, gelenkig mit dem Fahrzeugrahmen (10) verbundenen Enden (3b) erstreckt.

13. Aufhängung nach einem der vorhergehenden Ansprüche,
**dadurch gekennzeichnet**,
daß die Mittelachse (12) des Fahrzeugrades (R) den Fahrzeugrahmen (10) schneidet.

14. Aufhängung nach einem der vorhergehenden Ansprüche,
**dadurch gekennzeichnet**,
daß ein Lenkhebel (17) an einer oberen Verlängerung des Innenkörpers (1a) befestigt ist, wobei der Lenkhebel (17) an einer Spurstange (7) angeschlossen ist.

## Claims

1. A suspension for a hydraulic-motor (2) driven vehicle wheel (R) comprising an axle carrier (9) rotatably supported in a guide joint (1) having an inner body (1a) and an outer body (1b), said axle carrier (9) being connected via suspension arms (4) to a vehicle (10), and said hydraulic motor (2) being supplied with hydraulic fluid via an upper suspension arm (4) and said guide joint (1),
**characterized in**
that two separate upper suspension arms (4) are hinged to said outer body (1b) via spaced-apart upper bearing points (14) and that hydraulic fluid is supplied via the bearing point of the one of said upper suspension arms (4) and is discharged via the bearing point of said other suspension arm.

2. The suspension according to claim 1,
**characterized in**
that a separate hydraulic rotary passage which extends through the outer wall of said outer body (1b) and the interior of said inner body (1a) is assigned to each of said upper bearing points (14).

3. The suspension according to any one of the preceding claims,
**characterized in**
that each of said upper bearing points (14) is connected to an oil connection of said hydraulic motor (2) via one of two oil ducts (8c) extending separately side by side through said interior body (1a).

4. The suspension according to any one of the preceding claims, **characterized in**
that each of said upper suspension arms (4) is provided with an oil duct (8b) which is connected to one of said hydraulic rotary passages.

5. The suspension according to any one of the preceding claims,
**characterized in**
that each rotary passage comprises a first annular channel in the inner wall of said outer body (1b) and a second annular channel in alignment with said first annular channel in the surface of the rotatable annular body (1a), said second annular channel being connected to the associated oil duct (8c).

6. The suspension according to any one of the preceding claims,
**characterized in**
that the two upper suspension arms (4) with their bearing points (14) are hingedly supported on the upper end of said outer body (1b) to be opposite to each other, and that the inner ends (15) of said upper suspension arms (4) are hingedly secured to said vehicle frame (10).

7. The suspension according to any one of the preceding claims,
**characterized in**
that said upper suspension arms (4) are arranged in V-shaped fashion relative to each other.

8. The suspension according to any one of the preceding claims,
**characterized in**
that said bearing points (14) and/or the inner ends (15) of said upper suspension arms are formed as ball heads (15) which are passed through by a bore to which the respective oil duct (8b) of said suspension arm (4) is connected.

9. The suspension according to any one of the preceding claims,
**characterized in**
that said outer body (1b) of said guide joint (1) is connected to the outer tube of a spring cylinder (6) whose piston rod (6a) is supported on said vehicle frame (10) and which is arranged between said two upper suspension arms (4).

10. The suspension according to any one of the preceding claims,
**characterized in**
that said spring cylinder (6) is formed as a tensile cylinder.

11. The suspension according to any one of the preceding claims, **characterized in** that a multi-stage transmission (5) which is assigned to said hydraulic motor in drive-transmitting fashion is held within said axle carrier (9).

12. The suspension according to any one of the preceding claims,
**characterized in**
that there is provided a lower suspension arm (3) whose outer end (3a) is hingedly connected to said axle carrier (9) and which extends from said outer end (3a) in V-shaped configuration to two inner ends (3b) which are hingedly connected to said vehicle frame (10).

13. The suspension according to any one of the preceding claims,
**characterized in**
that the center axis (12) of said vehicle wheel (R) intersects said vehicle frame (10).

14. The suspension according to any one of the preceding claims,
**characterized in**
that a steering lever (17) is secured to an upper extension of said inner body (1a), said steering lever (17) being connected to a tie rod (7).

## Revendications

1. Suspension pour une roue de véhicule (R) entraînée par un moteur hydraulique (2), comprenant un support d'axe (9) monté pivotant dans une articulation directrice (1) comportant un corps intérieur (1a) et un corps extérieur (1b), le support d'axe (9) étant relié au véhicule (10) par l'intermédiaire des bras oscillants (4) transversaux, et le moteur hydraulique (2) étant alimenté en fluide hydraulique au travers d'un bras oscillant (4) transversal supérieure et de l'articulation directrice (1), caractérisée en ce que
deux bras oscillants (4) transversaux supérieurs séparés sont articulés sur le corps extérieur (1b) par l'intermédiaire de points d'appui supérieurs (14) situés à distance l'un de l'autre, et l'arrivée de fluide hydraulique se fait au travers du point d'appui de l'un des bras oscillants (4) transversaux supérieurs et l'évacuation de fluide hydraulique, au travers du point d'appui de l'autre bras oscillant transversal.

2. Suspension selon la revendication 1,
caractérisée en ce que,
à chaque point d'appui supérieur (14), est associé un passage de fluide hydraulique tournant séparé, traversant la paroi extérieure du corps extérieur (1b) et l'intérieur du corps intérieur (1a).

3. Suspension selon l'une des revendications précédentes, caractérisée en ce que
chaque point d'appui supérieur (14) est relié à un raccord d'huile du moteur hydraulique (2) par l'intermédiaire de l'un de deux canaux d'huile (8c) s'étendant séparément, l'un à côté de l'autre, à travers le corps intérieur (1a).

4. Suspension selon l'une des revendications précédentes, caractérisée en ce que
chacun des bras oscillants (4) transversaux supérieurs est pourvu d'un canal d'huile (8b), qui est relié à l'un des passages de fluide hydraulique tournants.

5. Suspension selon l'une des revendications précédentes, caractérisée en ce que
chaque passage tournant comporte un premier canal annulaire dans la paroi intérieure du corps extérieur (1b) et un second canal annulaire, aligné avec le premier canal annulaire, dans la surface libre du corps annulaire pivotant (1a), le second canal annulaire étant relié au canal d'huile correspondant (8c).

6. Suspension selon l'une des revendications précédentes, caractérisée en ce que
les deux bras oscillants (4) transversaux supérieurs sont, par leurs points d'appui (14), montés, en y étant articulés, sur l'extrémité supérieure du corps extérieur (1b), l'un en face de l'autre, et en ce que les extrémités intérieures (15) des bras oscillants (4) transversaux supérieurs sont fixées, en y étant articulées, au châssis (10) du véhicule.

7. Suspension selon l'une des revendications précédentes, caractérisée en ce que
les bras oscillants (4) transversaux supérieurs sont disposés l'un par rapport à l'autre sous la forme d'un V.

8. Suspension selon l'une des revendications précédentes, caractérisée en ce que
les points d'appui (14) et/ou les extrémités intérieures (15) des bras oscillants transversaux supérieurs sont réalisés sous forme de rotules (15), qui sont traversées par une forure, à laquelle est raccordé le canal d'huile respectif (8b) du bras oscillant (4) transversal.

9. Suspension selon l'une des revendications précédentes, caractérisée en ce que
le corps extérieur (1b) de l'articulation directrice (1) est relié au tube extérieur d'un cylindre à ressort (6), dont la tige de piston (6a) est montée sur le châssis (10) du véhicule, et qui est disposé entre les deux bras oscillants (4) transversaux supérieurs.

10. Suspension selon l'une des revendications précédentes, caractérisée en ce que
le cylindre à ressort (6) est réalisé sous la forme d'un cylindre de traction.

11. Suspension selon l'une des revendications précédentes, caractérisée en ce que,
à l'intérieur du support d'axe (9), est contenue une boîte de vitesses (5) à plusieurs rapports, qui est adjointe au moteur hydraulique avec transmission de la force d'entraînement.

12. Suspension selon l'une des revendications précédentes, caractérisée en ce
qu'il est prévu un bras oscillant (3) inférieur, dont l'extrémité extérieure (3a) est reliée, en y étant articulée, au support d'axe (9) et qui, depuis l'extrémité extérieure (3a), s'étend sous la forme d'un V jusqu'à deux extrémités intérieures (3b), reliées, en y étant articulées, au châssis (10) du véhicule.

13. Suspension selon l'une des revendications précédentes, caractérisée en ce que
l'axe central (12) de la roue (R) du véhicule coupe le châssis (10) du véhicule.

14. Suspension selon l'une des revendications précédentes, caractérisée en ce
qu'un levier de commande de direction (17) est fixé à un prolongement supérieur du corps intérieur (1a), le levier de commande de direction (17) étant raccordé à une bielle de connexion (7).
